# FASCICULE DE BREVET EUROPEEN

(11) **EP 1 452 394 B1**
(45) Date de publication et mention de la délivrance du brevet: **19.04.2006**
(21) Numéro de dépôt: 04290518.2
(22) Date de dépôt: 25.02.2004
(51) Int. Cl.: B60R 7/04, B60N 2/46

(54) **Console coulissante commandable**
Gleitsteuerkonsole
Sliding control console

(30) Priorité: 28.02.2003 FR 0302451
(43) Date de publication de la demande: 01.09.2004
(73) Titulaire: Renault s.a.s., 92100 Boulogne Billancourt (FR)
(72) Inventeur: Feyel, Marie-Claire, 78000 Versailles (FR); Mouvaux, Jean-Yves, 59273 Fretin (FR); Panhelleux, Jérôme, 75015 Paris (FR); Soullier, Bernard, 59112 Annoeullin (FR); Volckmann, Philippe, 25480 Ecole Valentin (FR)

(56) Documents cités:
- EP-A- 1 197 382
- WO-A-01/32469
- US-A- 4 202 030
- US-A- 5 713 621
- US-B1- 6 203 088

## Description

La présente invention se rapporte à une console coulissante, notamment pour automobile, et qui présente un évidement de rangement et des moyens de commande en translation.

Des consoles coulissantes connues, sont disposées entre les sièges des véhicules automobiles, par exemple entre les sièges des deux passagers avant, et elles sont montées sur des rails orientés longitudinalement par rapport audit véhicule. De la sorte, une console est adaptée à être entraînée en translation entre les deux sièges et entre une position reculée écartée du tableau de bord du véhicule automobile et une position avancée, rapprochée dudit véhicule.

Ladite console coulissante est adaptée à être bloquée en translation dans des positions comprises entre lesdites positions reculée et avancée par un organe de blocage commandable au moyen d'une manette pivotante. Ladite manette pivotante permet de déverrouiller ledit organe de blocage pour entraîner ladite console coulissante en translation. L'organe de blocage et ladite manette sont maintenus en position de blocage par des moyens de rappel élastiques formés par exemple d'un ressort.

L'intérêt d'une telle console réside dans l'évidement de rangement qui est ménagé à l'intérieur et qui débouche dans sa paroi supérieure, ledit évidement de rangement permettant de loger notamment, tous les éléments nécessaires à la conduite automobile. Les cartes routières, les gants ou tout autre objet dont on peut avoir besoin durant la conduite est susceptible d'être logé dans cet évidement de rangement. En outre, une telle console coulissante est adaptée à être positionnée et maintenue en position fixe en fonction de la taille des conducteurs. On pourra se référer notamment au document FR 2 815 307 qui décrit une telle console coulissante.

En revanche, l'évidement de rangement qui est ouvert dans sa paroi supérieure est relativement profond et donc sombre. En outre, l'entraînement en translation de la console nécessite à la fois de manoeuvrer ladite manette et d'exercer une force sur la console coulissante.

Un problème qui se pose et que vise à résoudre la présente invention est alors de proposer une console coulissante qui soit non seulement déplaçable aisément, mais aussi qui permettent d'identifier rapidement un objet logé au fond de l'évidement de rangement.

Dans ce but, la présente invention propose une console coulissante comportant des moyens de commande en translation, qui présente un évidement de rangement et qui comprend un module de commande comportant des moyens d'éclairage et des moyens de commande desdits moyens d'éclairage, ledit module de commande étant adapté à être logé au moins partiellement dans ledit évidement de rangement pour l'éclairer ; lesdits moyens de commande en translation étant portés par ledit module de commande.

Ainsi, une caractéristique de l'invention réside dans l'intégration, sur un même module de commande adapté à être monté dans ledit évidement de rangement, des moyens d'éclairage commandables et des moyens de commande en translation de la console coulissante. De la sorte, les moyens d'éclairage portés par ledit module de commande sont logés dans l'évidement de rangement et permettent d'éclairer le fond pour identifier clairement ce qu'il contient. Par ailleurs, les moyens de commande en translation sont adaptés à être montés sur le module de commande avant qu'il ne soit installé dans la console coulissante, ce qui rend plus aisé le montage.

Préférentiellement, lesdits moyens de commande en translation comprennent une poignée, prolongeant ledit module de commande en dehors dudit évidement de rangement et une commande de déverrouillage en translation de ladite console coulissante, montée dans ladite poignée. Grâce à cette caractéristique avantageuse, non seulement ladite poignée est aisément saisissable avec une seule main puisqu'elle s'étend en saillie au-dessus de la console coulissante à travers l'ouverture de l'évidement de rangement mais aussi elle permet d'entraîner la console coulissante en actionnant simultanément avec la même main la commande de déverrouillage.

Ladite commande de déverrouillage est formée, de façon avantageuse, d'un premier contacteur électrique destiné à commander un organe de déverrouillage. De la sorte, le module de commande est câblé de fils électriques terminés pour au moins l'un d'entre eux par le premier contacteur électrique, par exemple relié à la masse, et qui permet d'actionner sans effort la commande de déverrouillage.

De manière analogue, et selon un mode de mise en oeuvre de l'invention particulièrement avantageux, lesdits moyens de commande desdits moyens d'éclairage comprennent un deuxième contacteur électrique adapté à activer lesdits moyens d'éclairage.

En outre, avantageusement, lesdits moyens de commande desdits moyens d'éclairage comprennent un troisième contacteur électrique adapté à coopérer avec un organe de fermeture dudit logement de rangement pour activer lesdits moyens d'éclairage lorsque ledit organe de fermeture est dans une position repliée. Grâce à cette caractéristique, d'une part l'évidement de rangement est susceptible d'être refermé ce qui permet d'éviter que des éléments indésirables n'échoient à l'intérieur et d'autre part, l'éclairage est commandé automatiquement dès que l'on actionne l'organe de fermeture.

Selon un mode de réalisation de l'invention particulièrement avantageux, ledit module de commande présente deux faces opposées présentant chacune des moyens d'éclairage et il est adapté à être logé en divisant en deux portions ledit évidement de rangement, lesdits moyens d'éclairage étant susceptibles d'éclairer respectivement lesdites portions. Ainsi, l'évidement de rangement est formé de deux logements sans qu'il soit nécessaire de prévoir une cloison particulière.

En outre, de façon avantageuse, ledit module de commande comprend un connecteur unique de raccordement à des moyens d'alimentation électriques. De la sorte, au cours du montage dudit module de commande dans la console coulissante il suffit de raccorder le connecteur unique aux moyens d'alimentation électrique et de le solidariser à ladite console, ce qui simplifie considérablement le montage.

Avantageusement, ledit module de commande comprend en outre un quatrième contacteur électrique adapté à commander des organes de désolidarisation de ladite console pour la séparer de ladite automobile.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels:
- la Figure 1 est une vue schématique éclatée en perspective illustrant une console coulissante conforme à l'invention ;
- la Figure 2 est une vue de détail en perspective de deux éléments assemblés, illustrés sur la Figure 1 ;
- la Figure 3 est une vue schématique en perspective de détail de la face arrière selon III d'un élément représenté sur la Figure 1 et,
- la Figure 4 est une vue schématique en perspective de la face avant selon IV de l'élément illustré sur la Figure 3.

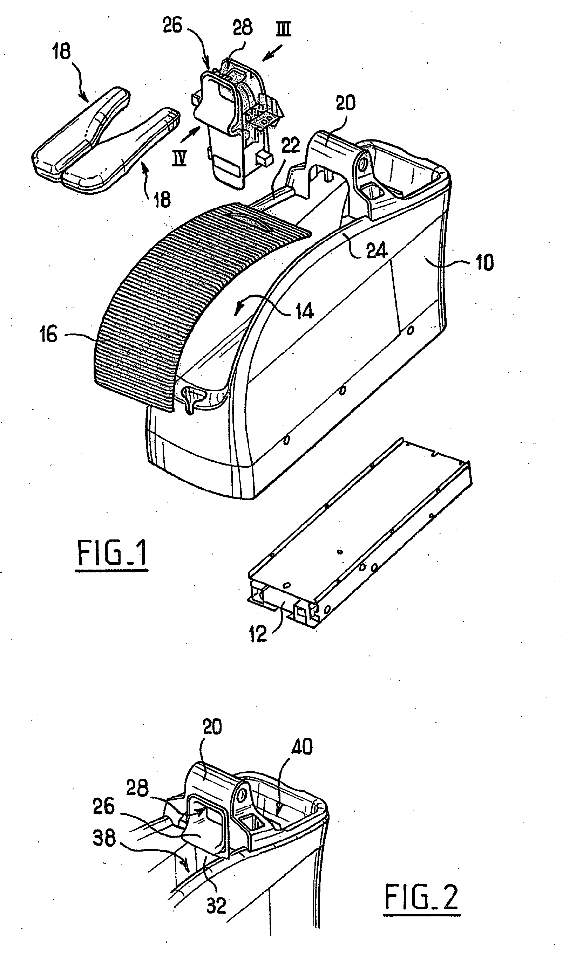

La Figure 1 montre les éléments essentiels d'une console coulissante conforme à l'invention et destinée à être installée entre les sièges des passagers avant d'un véhicule automobile.

La console comprend un coffre 10 destiné à être monté sur un châssis 12 solidaire du plancher dudit véhicule automobile. Le coffre 10 comporte des moyens de liaison non représentés situés à sa base permettant de le relier au châssis 12 et lui permettant de coulisser longitudinalement, ainsi qu'un dispositif de verrouillage du déplacement en translation et un organe de déverrouillage commandable dudit dispositif.

Le coffre 10 présente un évidement de rangement 14 ouvert dans sa paroi supérieure et dans lequel sont susceptibles d'être insérés des objets. L'ouverture de la paroi supérieure est adaptée à être obturée par un volet flexible coulissant 16 dont les deux bords latéraux opposés sont guidés en translation respectivement dans deux rainures opposées bordant les deux bords longitudinaux opposés de l'ouverture.

Deux accoudoirs 18 sont adaptés à être montés à pivotement sur une garniture 20 chevauchant l'évidement de rangement 14 et formant une arche qui relie les deux parois latérales opposées 22, 24 du coffre 10.

En outre, un module de commande 26 est adapté à être monté verticalement au moins partiellement dans l'évidement de rangement 14 de façon que son extrémité supérieure 28 coopère avec la garniture 20, comme l'illustre la Figure 2. On retrouve sur cette Figure 2, la garniture 20 sous laquelle est encastrée l'extrémité supérieure 28 du module de commande 26 et qui coopère avec elle pour former une poignée.

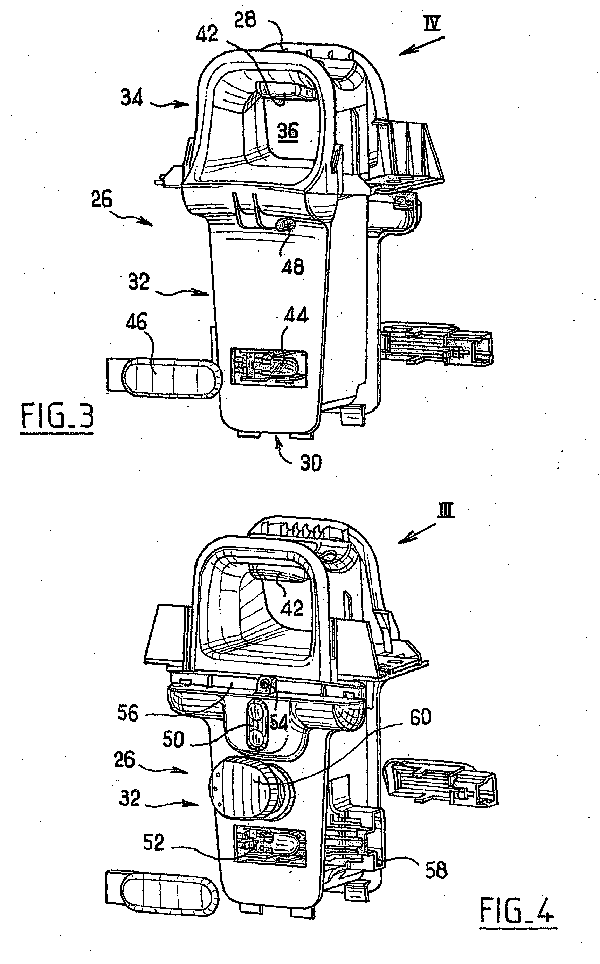

On se référera aux Figures 3 et 4 pour décrire plus en détail le module de commande 26, la Figure 3 montrant la face arrière du module de commande 26 et la Figure 4, la face avant.

Le module de commande 26 définit une enveloppe moyenne sensiblement parallélépipédique et il s'étend entre son extrémité supérieure 28 et une extrémité inférieure 30, Une partie inférieure 32 est adaptée à être encastrée dans l'évidement de rangement 14 en appui contre la face interne des deux parois latérales opposées 22, 24 et une partie supérieure 34 est destinée à être logée, en saillie de l'ouverture de l'évidement de rangement 14, sous la garniture 20. Cette partie supérieure 34 présente un évidement longitudinal 36 débouchant dans chacune des faces avant et arrière.

Sur la Figure 2, la partie inférieure 32 du module de commande 26 divise en deux compartiments 38, 40 sensiblement indépendant l'un de l'autre, l'évidement de rangement 14 et la partie supérieure 34 coopère entièrement avec la garniture 20 pour former une poignée ergonomique qui s'étend au-dessus de l'évidement de rangement 14.

Le module de commande 26 conforme à l'invention est avantageux en ce qu'il supporte toutes les commandes nécessaires aux fonctionnalités de la console coulissante.

En référence à la Figure 3, l'extrémité supérieure 28 du module de commande 26 comporte une commande de déverrouillage en translation, en saillie dans l'évidement longitudinal 36, constituée d'un premier contacteur électrique 42 à bouton poussoir à moyens de rappel élastiques, adapté à être actionné en translation dans une direction opposée à l'évidement de rangement et à commander ledit organe de déverrouillage.

Le bouton poussoir étant logé sous l'ensemble constitué de la garniture 20 et de l'extrémité supérieure 28 et formant poignée, il n'est actionnable correctement qu'en saisissant entièrement la poignée. De plus, il est protégé et donc préservé d'éventuels contacts qui pourraient être effectués par inadvertance. La console coulissante est donc susceptible d'être entraînée en translation dès lors que l'on a une réelle intention de la mouvoir. Par ailleurs; grâce à la position du bouton poussoir, il est aisé d'une seule main, à la fois de l'actionner et de saisir la poignée pour entraîner en translation la console coulissante.

Le module de commande 26 comprend en outre des premiers moyens d'éclairage 44, constitués d'une ampoule électrique, encastrés dans la face arrière de la partie inférieure 32 et adaptés à être recouverts par un verre translucide 46 de protection. L'alimentation de ladite ampoule est commandable au moyen d'un interrupteur 48 en saillie de la face arrière à la base de la poignée. De la sorte, l'éclairage du compartiment 40 dont une paroi est constituée par la face arrière de la partie inférieure 32 est susceptible d'être commandé aisément grâce à l'interrupteur 48 au voisinage de la poignée.

On se référera maintenant à la Figure 4 pour décrire la face avant du module de commande 26 qui est opposée à la face arrière illustrée sur la Figure 3.

Outre le premier contacteur électrique 42 que l'on retrouve sur cette Figure 4, le module de commande 26 comporte un deuxième contacteur électrique 50, à bascule, destiné à commander des seconds moyens d'éclairage 52 encastrés, de façon symétrique par rapport aux premiers, dans la partie inférieure 32.

De plus, un troisième contacteur électrique 54 à bouton poussoir, maintenu dans une position activée par des moyens de rappel élastiques, est logé sensiblement au centre d'une rainure 56 dans laquelle le bord de l'extrémité libre du volet flexible coulissant 16 vient s'engager dans une position de fermeture de l'évidement de rangement 14. De la sorte, ledit bord de l'extrémité libre est apte à coopérer avec le troisième contacteur électrique 54, pour le maintenir en position désactivée lorsque le volet flexible coulissant 16 est dans ladite position de fermeture et pour le libérer dans une position activée lorsque ledit volet flexible coulissant 16 est ouvert.

Le deuxième contacteur 50 est situé dans l'évidement de rangement 14 sous la rainure 56 et il est adapté à être basculé entre une position d'activation des seconds moyens d'éclairage 52 et une position de désactivation des moyens d'éclairage 52, dès lors que le volet flexible coulissant 16 est ouvert. Ainsi, il est possible de désactiver les seconds moyens d'éclairage 52, par exemple pour éviter un éventuel désagrément causé par la lumière produite par les seconds moyens d'éclairage 52 activés automatiquement quand le volet flexible 16 est ouvert.

Bien évidement, dès que le volet flexible coulissant 16 est dans ladite position de fermeture, non seulement le deuxième contacteur 50 n'est pas commandable, mais les seconds moyens d'éclairage 52 sont désactivés.

Comme l'illustre la Figure 4, le module de commande 26 comprend un connecteur unique 58 adapté à être connecté à l'alimentation électrique du véhicule automobile, par exemple une batterie d'accumulateurs.

Ainsi, un seul module de commande 26 est apte à supporter l'ensemble des commandes d'éclairage et de déverrouillage des moyens de verrouillage en translation de la console coulissante.

De plus, avantageusement, le module électrique 26 comporte une prise électrique 60, par exemple pour permettre l'alimentation électrique d'un téléphone portable.

En outre, dans un mode de réalisation non représenté, il est prévu un quatrième contacteur électrique pour commander des organes de désolidarisation de ladite console de façon à pouvoir la monter et la démonter aisément.

## Revendications

1. Console coulissante, notamment pour automobile, présentant un évidement de rangement (14) et comportant des moyens de commande en translation ;
**caractérisée en ce qu'**elle comprend un module de commande (26) comportant des moyens d'éclairage (44, 52) et des moyens de commande (50, 54) desdits moyens d'éclairage (44, 52), ledit module de commande (26) étant adapté à être logé au moins partiellement dans ledit évidement de rangement (14) pour l'éclairer;
et **en ce que** lesdits moyens de commande en translation (42, 20, 28) sont portés par ledit module de commande (26).

2. Console coulissante selon la revendication 1, **caractérisée en ce que** lesdits moyens de commande en translation (42, 20, 28) comprennent une poignée, prolongeant ledit module de commande (26) en dehors dudit évidement de rangement (14) et une commande de déverrouillage (42) en translation de ladite console coulissante, montée dans ladite poignée.

3. Console coulissante selon la revendication 2, **caractérisée en ce que** ladite commande de déverrouillage (42) est formée d'un premier contacteur électrique destiné à commander un organe de déverrouillage.

4. Console coulissante selon l'une quelconque des revendications 1 à 3, **caractérisée en ce que** lesdits moyens de commande (50, 54) desdits moyens d'éclairage (44, 52) comprennent un deuxième contacteur électrique (50) adapté à activer lesdits moyens d'éclairage (44, 52).

5. Console coulissante selon l'une quelconque des revendications 1 à 4, **caractérisée en ce que** lesdits moyens de commande (50, 54) desdits moyens d'éclairage (44, 52) comprennent un troisième contacteur électrique (54) adapté à coopérer avec un organe de fermeture (16) dudit logement de rangement (14) pour activer lesdits moyens d'éclairage (44, 52) lorsque ledit organe de fermeture (16) est dans une position repliée.

6. Console coulissante selon l'une quelconque des revendications 1 à 5, **caractérisée en ce que** ledit module de commande (26) présente deux faces opposées présentant chacune des moyens d'éclairage (44, 52) et **en ce qu'**il est adapté à être logé en divisant en deux portions (38, 40) ledit évidement de rangement (14), lesdits moyens d'éclairage (44, 50) étant susceptibles d'éclairer respectivement lesdites portions (38,40).

7. Console coulissante selon l'une quelconque des revendications 1 à 6, **caractérisée en ce que** ledit module de commande (26) comprend un connecteur unique (58) de raccordement à des moyens d'alimentation électriques.

8. Console coulissante selon l'une quelconque des revendications 1 à 7, **caractérisée en ce que** ledit module de commande (26) comprend en outre un quatrième contacteur électrique adapté à commander des organes de désolidarisation de ladite console pour la séparer de ladite automobile.

9. Console coulissante selon l'une quelconque des revendications 1 à 8, **caractérisée en ce que** ledit module de commande (26) comprend en outre une prise électrique (60).

## Patentansprüche

1. Gleitkonsole, insbesondere für ein Fahrzeug, welche einen Stauraum (14) aufweist und Translationssteuermittel umfasst;
**dadurch gekennzeichnet, dass** sie ein Steuermodul (26) aufweist, welches Beleuchtungsmittel (44, 52) und Steuermittel (50, 54) der Beleuchtungsmittel (44, 52) aufweist, wobei das Steuermodul (26) angepasst ist, mindestens teilweise in dem Stauraum (14) untergebracht zu werden, um ihn zu beleuchten;
und **dadurch**, dass die Translationssteuermittel (42, 20, 28) durch das Steuermodul (26) getragen werden.

2. Gleitkonsole nach Anspruch 1, **dadurch gekennzeichnet, dass** die Tranlsationssteuermittel (42, 20, 28) einen Griff aufweisen, welcher das Steuermodul (26) nach außen von dem Stauraum (14) verlängert, und ein Steuerteil zur Entriegelung (42) in Translation der Gleitkonsole, welches in dem Griff montiert ist.

3. Gleitkonsole nach Anspruch 2, **dadurch gekennzeichnet, dass** das Entriegelungssteuerteil (42) durch einen ersten elektrischen Schalter gebildet wird, der dafür bestimmt ist, ein Entriegelungsbauteil zu steuern.

4. Gleitkonsole nach einem der Ansprüche 1 bis 3, **dadurch gekennzeichnet, dass** die Steuermittel (50, 54) der Beleuchtungsmittel (44, 52) einen zweiten elektrischen Schalter (50) aufweisen, welcher angepasst ist, die Beleuchtungsmittel (44, 52) zu aktivieren.

5. Gleitkonsole nach einem der Ansprüche 1 bis 4, **dadurch gekennzeichnet, dass** die Steuermittel (50, 54) der Beleuchtungsmittel (44, 52) einen dritten elektrischen Schalter (54) aufweisen, der angepasst ist, mif einem Schließbauteil (16) des Stauraums (14) zusammenzuwirken, um die Beleuchtungsmittel (44, 52) zu aktivieren, wenn das Schließbauteil (16) in einer zurückgezogenen Stellung ist.

6. Gleitkonsole nach einem der Ansprüche 1 bis 5, **dadurch gekennzeichnet, dass** das Steuermodul (26) zwei gegenüberliegende Seiten aufweist, welche jede Beleuchtungsmittel (44, 52) aufweisen, und dass es angepasst ist, unter einem Aufteilen des Stauraums (14) in zwei Abschnitten (38, 40) untergebracht zu werden, wobei die Beleuchtungsmittel (44, 52) fähig sind, jeweils die Abschnitte (38, 40) zu beleuchten.

7. Gleitkonsole nach irgendeinem der Ansprüche 1 bis 6, **dadurch gekennzeichnet, dass** das Steuermodul (26) einen einzigen Verbindungsstecker (58) mit elektrischen Versorgungsmitteln umfasst.

8. Gleitkonsole nach irgendeinem der Ansprüche 1 bis 7, **dadurch gekennzeichnet, dass** das Steuermodul (26) des Weiteren einen vierten elektrischen Schalter aufweist, der angepasst ist, Ablösebauteile der Konsole zu steuern, um sie vom Kraftfahrzeug zu trennen.

9. Gleitkonsole nach irgendeinem der Ansprüche 1 bis 8, **dadurch gekennzeichnet, dass** das Steuermodul (26) des Weiteren eine elektrische Steckdose (60) aufweist.

## Claims

1. A sliding console, in particular for an automobile vehicle, comprising a storage recess (14) and comprising translation control means, **characterised in that** it comprises a control module (26) comprising lighting means (44, 52) and control means (50, 54) for these lighting means (44, 52), the control module (26) being adapted to be housed at least partially in the storage recess (14) in order to light it, and **in that** the translation control means (42, 20, 28) are borne by the control module (26).

2. A sliding console as claimed in claim 1, **characterised in that** the translation control means (42, 20, 28) comprise a handle prolonging the control module (26) outside the storage recess (14) and an unlocking control (42) of the translation of the sliding console mounted in the handle.

3. A sliding console as claimed in claim 2, **characterised in that** the unlocking control (42) is formed by a first electrical switch adapted to control an unlocking member.

4. A sliding console as claimed in any one of claims 1 to 3, **characterised in that** the control means (50, 54) of the lighting means (44, 52) comprise a second electrical switch (50) adapted to actuate the lighting means (44, 52).

5. A sliding console as claimed in any one of claims 1 to 4, **characterised in that** the control means (50, 54) of the lighting means (44, 52) comprise a third electrical switch (54) adapted to cooperate with a closure member (16) of the storage recess (14) in order to actuate the lighting means (44, 52) when the closure member (16) is in a folded-up position.

6. A sliding console as claimed in any one of claims 1 to 5, **characterised in that** the control module (26) comprises two opposing surfaces each comprising lighting means (44, 52) and **in that** it is adapted to be housed by dividing this storage recess (14) into two portions (38, 40), the lighting means (44, 50) being adapted to light these portions (38, 40) respectively.

7. A sliding console as claimed in any one of claims 1 to 6, **characterised in that** the control module (26) comprises a single connector (58) for connection to electrical supply means.

8. A sliding console as claimed in any one of claims 1 to 7, **characterised in that** the control module (26) further comprises a fourth electrical switch adapted to control disconnecting members of the console so that it can be detached from the automobile vehicle.

9. A sliding console as claimed in any one of claims 1 to 8, **characterised in that** the control module (26) further comprises an electrical socket (60).
